# EUROPEAN PATENT APPLICATION

(11) **EP 1 833 215 A1**
(43) Date of publication of application: **12.09.2007**
(21) Application number: 06110997.1
(22) Date of filing: 10.03.2006
(51) Int. Cl.: H04L 27/26

(54) **Detection of excessive signal power**

(71) Applicant: Harris Broadcast Systems Europe, 6830 Rankweil-Brederis (AT)
(72) Inventor: Schoenbeck, Dietmar, 6811, Goefis (AT)
(74) Representative: Fleuchaus, Michael A.

(57) **Abstract**

A method for detecting a condition, where the signal level of an information signal, particularly of an orthogonal frequency division multiplexed (OFDM) digital information signal, exceeds at least one upper predetermined signal level and/or underruns at least one lower predetermined signal level for at least a predetermined time interval by feeding the information signal to at least one first mixer unit for producing a first signal and comparing said first signal to a at least a first level threshold value. Counting the number of incidences per time unit where said first signal is above or below said first level threshold value and comparing said number of incidences per time unit to a first frequency threshold value allows determination, if the condition is met or not. A device for detecting a condition, where the signal level of an information signal, particularly of an orthogonal frequency division multiplexed (OFDM) digital information signal, exceeds at least one upper predetermined signal level and/or underruns at least one lower predetermined signal level for at least a first predetermined time interval comprises at least one first mixer unit to which the information signal is fed for producing an output of a first signal, which is fed to at least one first comparator for comparing the first signal to a first level threshold value. Feeding the output of the first comparator to at least one counter for counting the number of incidences per time unit and comparing the output of the counter indicating the number of incidences per time unit to a first frequency threshold value using at least one second comparator allows determination, if the condition is met or not.

## Description

The present invention refers to a method and a device for detecting an amplitude level of an information signal exceeding or underrunning predetermined threshold amplitude levels. Particularly, the present invention refers to a method and a device for detecting a condition, where the signal level of an information signal, particularly of a digital information signal, exceeds at least one upper predetermined signal level and/or underruns at least one lower predetermined signal level for at least a first predetermined time interval.

Information signals, particularly digital information signals, are ubiquitous in various aspects of communication technologies. Particularly, in digital communication technologies such as, for example, digital video broadcasting (DVB), digital audio broadcasting (DAB), wireless LAN (WLAN) and digital subscriber line (DSL) applications, orthogonal frequency division multiplexed (OFDM) signals or coded orthogonal frequency division multiplexed (COFDM) signals are widely used.

Such signals share the common property that their crest factor, which is defined by the ratio of the root mean square (RMS) level and the peak level of the signal, is very high. For example, in DVB-T applications, the signal peak level often exceed the RMS level by about 12 to 15 dB for several microseconds.

An increase of the peak level of an information signal versus its RMS level of this size leads to problems when realising power amplifiers for such information signals. This is mainly because the power amplification unit of a power amplifier, when being loaded with a respective increase in the short term power demand, may be harmed.

The situation even aggravates, when a peak level increase of the information signal as described occurs concurrently with an increase of the average signal level, e. g. in the millisecond domain. In such a situation, it may well happen that the load demand of a power amplification unit may, for a short period, rise above a critical level, thereby risking to destroy the power amplification unit.

One conceivable way to minimize the risk of destroying the power amplification unit of a power amplifier is to largely oversize the power amplification unit, thereby, however, increasing its complexity and price. Another way of mitigating the problem of excess peak level power demands of power amplification units is to control the amplifier input signal in such a way that the signal is regulated down upon detection of a critical peak level amplitude of the input signal.

Generally, however, such peak level detectors involve filter units, which, apart from requiring comparatively complex circuitry, are expensive and, particularly in the case of digital filters, require relatively long processing times for providing an output signal.

It is therefore an object of the present invention to provide a detector for signal levels, which exceed a certain predetermined threshold level as well as a respective method and uses thereof, which overcome the problem of known detectors of this kind and, in particular, which are characterized by a simplified design, fast processing and low priced components.

It is another object of the present invention to provide a protective circuit for signal levels, which exceed a certain predetermined threshold level, which overcomes the problems of known protective circuits of this kind and, in particular, which are characterized by a simplified design, fast processing and low priced components.

A solution to these objects is achieved by a method comprising the features of claim 1 as well as a device comprising the features of claim 11 and uses comprising the features of claim 24. The objects are further solved by a protective circuit having the features of claim 21. Preferred embodiments of the method, devices and uses of the present invention are subject to the respective dependent claims.

Accordingly, a method for detecting a condition, where the signal level of an information signal, particularly of an orthogonal frequency division multiplexed (OFDM) digital information signal, exceeds at least one upper predetermined signal level and/or underruns at least one lower predetermined signal level for at least a predetermined time interval according to the invention comprises the steps of:
- feeding the information signal to at least one first mixer unit for producing a first signal, said first signal representing at least a sufficiently close measure of the instantaneous level of the information signal;
- comparing said first signal to a at least a first level threshold value, said first level threshold value representing a measure of said predetermined upper or lower level of said information signal;
- counting the number of incidences per time unit where said first signal is above or below said first level threshold value, respectively, said time unit being determined by said predetermined time interval;
- comparing said number of incidences per time unit to a first frequency threshold value and determining, if the number of occurrences where said number of incidences exceeds the first frequency threshold value has a zero value or a non-zero value; and
- setting an output signal to a first value representing a CONDITION NOT MET state, if the said number of occurrences has a zero value or setting said output signal to a second value representing a CONDITION MET state, if the said number of occurrences has a non-zero value.

A CONDITION NOT MET state in accord with the present invention is such a state, where the signal level of the information signal is below the at least one upper predetermined signal level and/or above the at least one lower predetermined signal level, i. e. within the range defined by the upper and lower predetermined signal levels (threshold levels).

Correspondingly, a CONDITION MET state according to the present invention is a state where the signal level of the information signal either exceeds the upper predetermined signal level and/or underruns the lower predetermined signal level, thereby being either beyond or beneath the range of predetermined threshold levels.

A mixer unit in accord with the present invention is defined as a unit, which is operative to process a signal being fed to it (input signal) in such a way that the spectral components of the output signal are different from the spectral components of the input signal. Such processing may, for example, be achieved by adding or multiplying the input signal with a second input signal, which is also being fed to the mixer unit or by processing the input signal using a non-linear function like, for example, a parametric function such as a triangular function.

Particularly preferred mixer units include additive mixer units, multiplicative mixer units as well as rectifying mixer units.

In a preferred embodiment of the present invention, the said information signal is digital and comprises an I- and an Q-component, said I-component being fed to a second mixer unit and said Q-component being fed to a third mixer unit. The I- and Q-component of the said digital information signal are, at least initially, processed on separate information signal pathways, whereby the I-component may be processed differently than the Q-component is.

Such digital information signals comprising I- and Q-components are widely known in digital communication systems such as, for example, wired and wireless telephones, wired and wireless data transmission, etc.

In a particularly preferred embodiment, the output signals of the second and the third mixer units are fed to said first mixer unit, thereby providing the first mixer unit with a signal representing the result of the processing of the I- and the Q-components of the digital information signal by the second and third mixer units. The output signals of the second and third mixer units are then processed by the first mixer unit in order to produce as an output the first signal.

Preferably, the first mixer unit is operative to produce an additive mix of the signals being fed to it such as, for example, an additive mix of the output signals of the second and third mixer units. It is, however, also possible to feed the second and third mixer units with disparate signal components of other multicomponent information signals or even different information signals. In this particular embodiment of the present invention, the output signal of the second and third mixer units, i. e. the magnitudes of the signals being fed to the second and third mixer units are fed to the first mixer unit, which performs an additive mix of these signals, thereby producing a first signal representing an estimate of the instantaneous amplitude of the multicomponent information signal.

Alternatively, the second and third mixer units are operative to produce the magnitude of the signals being fed to them such as, for example, the magnitude of the 1-component as well as the magnitude of the Q-component, respectively, of a digital information signal. In order to produce the magnitude of an information signal or a component thereof, means such as, for example, rectifying means or digital calculation means may be employed in the second and/or third mixer units. In this particular embodiment of the present invention, said second and third mixer units are, most preferably, operative to produce a square of the signals being fed to them, which may, for example, be achieved by numerically squaring the digital signals being fed to the inputs of the second and third mixer units or by feeding the input signal, such as, for example, the I- and Q-component of the digital information signal to two inputs of a multiplicative mixer unit, thereby, effectively, multiplying the input signals by themselves. Feeding the output signal of the second and third mixer units such as, for example, the square of the I- and Q-component of the digital information signal, to the first mixer unit results in a first signal representing the instantaneous power χ² of the multi component information signal.

Although, in the embodiments presented so far, the second and third mixer units are preferably of the same type of mixer units, they may, of course, also be implemented as different type mixer units resulting in a setup having, for example, an additive mixer unit as the second mixer unit and a multiplicative mixer unit as the third mixer unit.

According to a particularly preferred embodiment of the present invention, the first signal is compared to at least a second and preferably to a second and a third level threshold value, said at least second and/or third level threshold value representing measures of at least second and/or third predetermined upper or lower levels of said information signal and the numbers of incidences per time unit are count, where said first signal is above or below said at least second and/or third level threshold value, respectively, wherein said time units are determined by at least a second and preferably a second and a third predetermined time intervals.

Said numbers of incidences per time unit is then compared to at least a second and preferably a second and a third frequency threshold value in order to determine, if the numbers of occurrences, where said numbers of incidences exceed at least the second and/or third level threshold value, respectively, in order to determine, if the numbers of occurrences, where said numbers of incidences exceed the at least second and/or third frequency threshold values have a zero value or a non-zero value.

In case the numbers of occurrences have zero value, the said output signal is set to a value representing a CONDITION NOT MET state, whereas the output signal is set to a second value representing a CONDITION MET state, if the said numbers of occurrences have a non-zero value.

Accordingly, the invention allows to determine more than one condition, where the signal level of the input signal exceeds an upper predetermine signal level and/or underruns a lower predetermined signal level, whereby, preferably, the upper and/or lower predetermined signal level values (upper and/or lower threshold values) are not equal, but represent different signal levels each. Further, each of said predetermined upper and/or lower threshold values may be assigned an individual predetermined time interval, such that a multitude of conditions are defined by the various combinations of predetermined signal levels and predetermined time intervals at which the method according to the present invention leads to the output of a CONDITION MET or a CONDITION NOT MET state.

Most preferably the multiple level threshold values and particularly the first, second and/or third level threshold value as well as the multiple time intervals and particularly the first, second and/or third time interval and the multiple frequency threshold values and particularly the first, second and/or third frequency threshold value are modified by a control unit, preferably in response to an external control input signal.

Of course, said level threshold values, time intervals and frequency threshold values may be fixed in a particular implementation of the present invention. It is, however, also within the scope of the present invention to allow a dynamic modification of the said values, in order to adapt the method of the invention to changing external parameters. Such modifications may, for example, be triggered by a superior control unit, which is operative to analyze such external parameters such as, for example, temperature drift, transmission quality, required transmission power, etc. of up- and/or downstream appliances, for example, by the use of analysing means such as bayesian networks, artificial intelligence processors or neural networks.

In another aspect of the present invention, the invention provides a device for detecting a condition, where the signal level of an information signal, particularly of an orthogonal frequency division multiplexed (OFDM) digital information signal, exceeds at least one upper predetermined signal level and/or underruns at least one lower predetermined signal level for at least a first predetermined time interval, the device being characterized by
- at least one first mixer unit to which the information signal is fed for producing an output of a first signal, said first signal representing at least a sufficiently close measure of the instantaneous level of the information signal;
- at least one first comparator to which the said first signal is fed for comparing the first signal to a first level threshold value, said first level threshold value representing a measure of said predetermined upper or lower level of said information signal;
- at least one counter to which the output of said first comparator is fed for counting the number of incidences per time unit, where the output of the said first comparator indicates that said first signal is above or below said first level threshold value, respectively;
- at least one second comparator to which the output of the counter indicating the number of incidences per time unit is fed for being compared to a first frequency threshold value; and
- means for determining, if the number of occurrences where said number of incidences exceed the first frequency threshold value has a zero value or a non-zero value, and setting an output signal to a first value representing a CONDITION NOT MET state, if the said number of occurrences has a zero value or setting said output signal to a second value representing a CONDITION MET state, if the said number of occurrences has a non-zero value.

In a preferred embodiment, the device according to the present invention comprises at least one timer for resetting the counter every time unit interval by a signal being fed to the counter from the timer. Preferably, the time unit by which the counter is periodically reset is determined by said predetermined time interval, which is being fed as an input signal to the timer.

In another preferred embodiment of the present invention, the first mixer unit is an additive mixer being operative to add together two input signals, which are being fed to disparate input ports of said additive mixer unit.

In yet another preferred embodiment, at least one second mixer unit and at least one third mixer unit are provided, wherein the outputs of the second and third mixer units are fed to the first mixer unit. Preferably, the second and/or third mixer units are multiplicative mixers. In yet another preferred embodiment, the second and/or third mixer units are rectifiers or similar components, which provide at their signal output the magnitude of the input signal.

Preferably, in a device according to the present invention, the second and/or third mixer units are so wired as to process one component, respectively, of an information signal and particularly a digital information signal having multiple components, such as, for example, an I- and Q-component.

In a particularly preferred embodiment of the present invention the device comprises at least a second and preferably a second and/or third set of comparators to which the said first signal is fed for comparing the first signal to at least a second and particularly a second and/or third level threshold value. Said second and/or third level threshold value, thereby, represent measures of at least a second predetermined upper or lower level of said information signal.

The output signal of the at least one second and/or third set of comparators is fed to at least a second and preferably a second and/or third set of counters for counting the numbers of incidences per time units, where the outputs of the said at least one second and/or third set of first comparators indicate that said first signal is above or below said at least one second and/or third level threshold values, respectively.

The output of the at least one second and/or third set of counters indicating the numbers of incidences per time units is then fed to at least a second and preferably a second and/or a third set of second comparators for being compared to at least a second and preferably a second and/or third frequency threshold value, respectively, thereby determining the numbers of occurrences where said numbers of incidences exceed the at least one second and/or third frequency threshold values.

Further, at least a second and preferably a second and/or third set of means for determining, if the numbers of occurrences have a zero value or a non-zero value set the output signal to a first value representing a CONDITION NOT MET state, if the said number of occurrences have a zero value or set the output signal to a second value representing a CONDITION MET state, if the numbers of occurrences have a non-zero value.

Preferably, the device further comprises at least a second and preferably a second and/or a third set of timers for resetting the second and/or third set of counters every time unit interval, respectively, by a signal being fed to the at least one respective second and/or third set of counters from the timers. Preferably, said time units at which the second and/or third se counters are periodically reset are determined by at least a second and preferably second and/or third predetermined time intervals, which are fed to said respective timers.

The provision of disparate level threshold values as well as time intervals allows to tailor the switching characteristics of a method or a device in accord with the present invention to exactly the requirements of the respective implementation such as, for example, in a protective circuit for a high power amplifier. Such amplifiers do, for example, tolerate signal levels or loads beyond an upper threshold level for certain time intervals, thereby making it unnecessary to cut off all excess signal levels but to cut off only such excess signal levels which the device will not tolerate without being harmed or destroyed.

Most preferably the device according to the invention is controlled by an external controller and preferably by a microprocessor having implemented thereon a suitable control program for modifying said level threshold values and preferably said first second and/or third level threshold values, said time intervals and preferably said first, second and/or third time intervals as well as said frequency threshold values and preferably said first, second and/or third frequency threshold values. The controller may control these values either following an external control signal or by an automatic control, such as for example by analysing external parameters using, for example, bayesian networks, a neural networks or artificial intelligence processors.

The device and method in accord with the present invention has the advantage of providing a very fast way of detecting signal levels, which are above or below one or multiple upper or lower threshold values, respectively, for one or several time intervals. Upon detection of such a condition, the output signal generated by the method and the device of the invention may be used to cut of such a signal, for example, in order to protect downstream appliances.

The omission of filter units in the device and method according to the invention allows for a very simple implementation of the invention, particularly in the case of digital signal processing. In such a case, a particularly preferred embodiment of the present invention can be implemented using approximately 250 logic gates, which, in comparison to signal level detectors according to the state of the art, represents a circuitry of only very little complexity.

Another object of the present invention is solved by a protective circuit of an information signal processor or an information signal amplifier and particularly a digital information signal processor or amplifier, in which the output signal provided by the method or device according to the invention is used to control an interrupter, which is operative to interrupt the signal path of the information signal, thereby removing the information signal from downstream appliances in the case of the detection of an excess signal level, or to switch to a different signal source in the case where a persistent fade of the signal level of the information signal below a certain threshold value is detected.

Preferably, such a protective circuit comprises at least one signal input for feeding the information signal to the signal path and at least one signal output for outputting the information signal after processing by the protective circuit to downstream appliances. For example, a protective circuit in accordance with the present invention may be implemented in the form of a module, particularly an optional module such as a slot-in module.

In a particularly preferred embodiment of the protective circuit according to the present invention the device is connected parallel to a signal processing unit for processing the information signal, which signal processing unit is preferably arranged upstream of the said interrupter in the signal path and which is, preferably, operative to delay the information signal for about an equal amount of time as processing of the digital information signal by the method or the device takes.

The provision of the signal processing unit will ensure that, for example, upon detection of an excess signal level by the device according to the present invention the information signal is prevented from being transferred to a downstream appliance, such as a power amplifier, even slightly before the excess signal level reaches the output of the protective circuit, thus making sure that such an excess signal level will not reach the power amplifier.

The protective circuit according to the invention, therefore, allows to dimension power amplifiers to the range, in which they are to be used even though the signals to be amplified by such power amplifiers might have a very high crest factor and thus bear the risk of harming or destroying the amplifier, had a protective circuit according to the invention not been provided. The invention therefore advantageously helps to minimize complexity and costs of information signal communication devices.

Further features and advantages of the present invention will become apparent by the following detailed description of preferred embodiments of the present invention in combination with the drawings. The drawings show:
- Fig. 1: A first embodiment of a device according to the present invention;
- Fig. 2: a second, alternative embodiment of a device according to the present invention;
- Fig. 3: a third, preferable embodiment of a device according to the present invention;
- Fig. 4: a protective circuit according to the present invention;
- Fig. 5: a switching characteristic of the embodiment of the invention of Fig. 3.

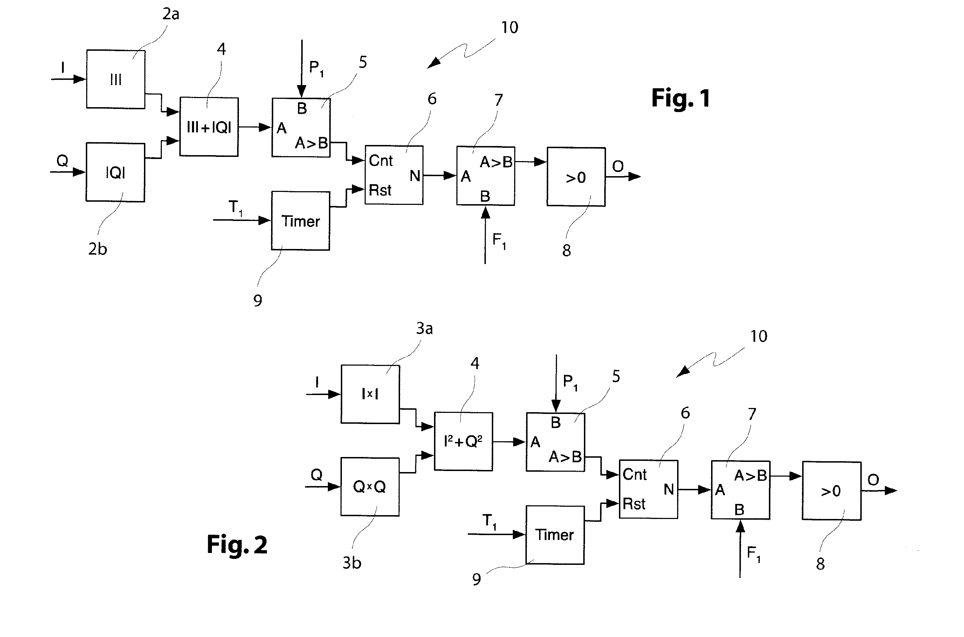

Fig.1 illustrates as a first embodiment of the present invention, a device 10 for use in a COFDM communication application, where the 1-component and the Q-component of the signal are fed to second and third mixer units 2a, 2b, respectively. The second and third mixer units are operative to provide as a signal output the magnitude of the input signal, i. e. the second mixer outputs the magnitude of the I-component of the COFDM signal and the third mixer outputs the magnitude of the Q-component of the COFDM signal.

The outputs of the second and third mixers are fed to the first mixer 4, which performs an additive mix such that the magnitudes of the I-component and the Q-component of the COFDM signal are added, thus providing a sufficiently accurate estimate of the instantaneous signal level of the COFDM signal.

This value represents the first signal, which is fed to a first input A of a first comparator 5. The first comparator 5 is also fed a first level threshold value P₁ at a second input B. The first comparator 5 is operative to provide at an output result of the comparison which, in the particular case of this embodiment, is a logical TRUE value, if the condition A > B is met and a logical FALSE value, if the condition is not met. Of course, the condition of the first comparator may be chosen differently such that, for example, the comparator output is set to TRUE, if the condition A < B is met and to FALSE, if the condition is not met.

The output signal of the first comparator 5 is fed to the counter 6, which counts the number of incidences N of a TRUE value output by the comparator 5 per time unit. The time unit is generated by timer 9 resetting the counter 6 every time unit interval. Timer 9 is programmed by the predetermined time interval value T₁.

The number of incidences N counted by counter 6 per time unit (frequency) is output to a second comparator 7 by feeding it to the second comparator 7 at a first input A. The second comparator 7 is also fed a frequency threshold value F₁ at its second input B. The second comparator 7 is operative to compare the frequency to the frequency threshold value using the condition A > B.

The output of the second comparator is set to a logical TRUE value, if the frequency exceeds the frequency threshold value F₁, i. e. if the condition of the second comparator 7 is met, and to a logical FALSE value, if the condition of the second comparator is not met, i. e. the frequency being below the frequency threshold value.

The output of the second comparator 7 is fed to means 8 for determine if the output signal of the second comparator 7 has a zero value, i. e. a FALSE value, or non-zero value, i. e. a TRUE value, the means being also operative to set the output signal (O) of the device 10 of the invention to a first value representing a CONDITION NOT MET state such as, for example, a logical FALSE value, or to a second value representing a CONDITION MET state, such as, for example, a logical TRUE value, depending if the condition is.

The embodiment of the present invention in accord with Fig. 2 has a very similar structure to the embodiment of Fig. 1, however, the second and third mixers 3a, 3b are replaced by multiplicative mixers, which are operative to produce as an output a square of the input signal, i. e. a square of the I-component and the Q-component of the COFDM signal, respectively. Feeding the output values of the second and third mixers, respectively to the first, additive mixer results in a first signal representing the instantaneous power χ² of the COFDM signal. The first signal is then further processed as described with reference to Fig. 1.

The devices 10 according to figures 1 and 2 the invention produce a CONDITION MET output signal, if the measure of the instantaneous signal level of the input signal is above the first level threshold value in more cases than specified by the frequency threshold value per unit time. The unit time in turn is defined by the predetermined time interval.

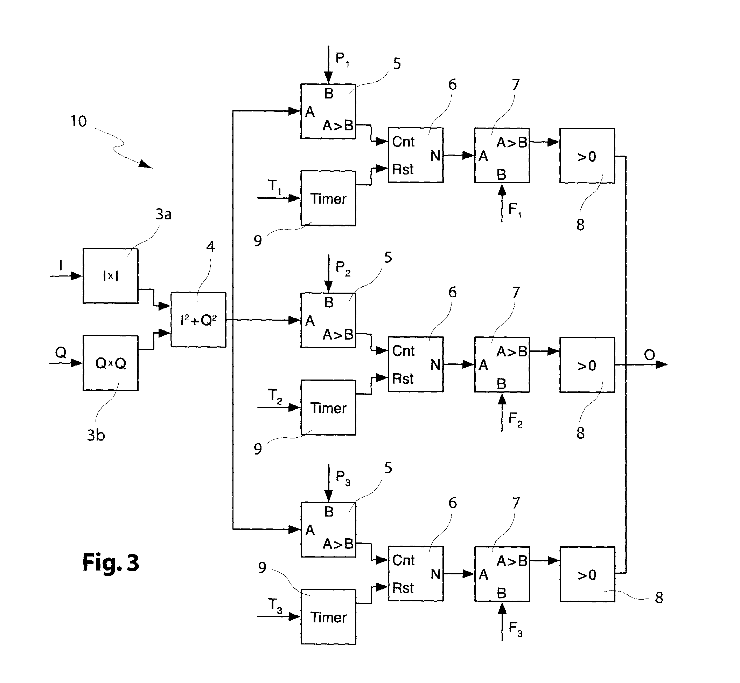

Fig. 3 shows a third embodiment of the present invention in which a multistage analysis of the information signal is performed. The structure of every single stage of the device 10 according to Fig. 3 resembles the structure of the device according to Fig. 2, whereby the first signal being an output of the first mixer 4 is fed to first inputs A of the first comparators 5 of every single stage, respectively. Correspondingly, every single stage of device 10 according to Fig. 3 is also fed a first, second and third level threshold value P₁, P₂, P₃, respectively, at second inputs B of the first comparators 5.

Timers 9 of each stage are fed first, second and third predetermined time interval values T₁, T₂, T₃, resulting in the counters 6 being periodically reset after respective time units, respectively. The second comparators 7 are, correspondingly, fed with first, second and third frequency threshold values F₁, F₂, F₃. The output signals of every one of the three stages of the device 10 according to Fig. 3 are then combined in order to be output to downstream appliances as a single output signal (O).

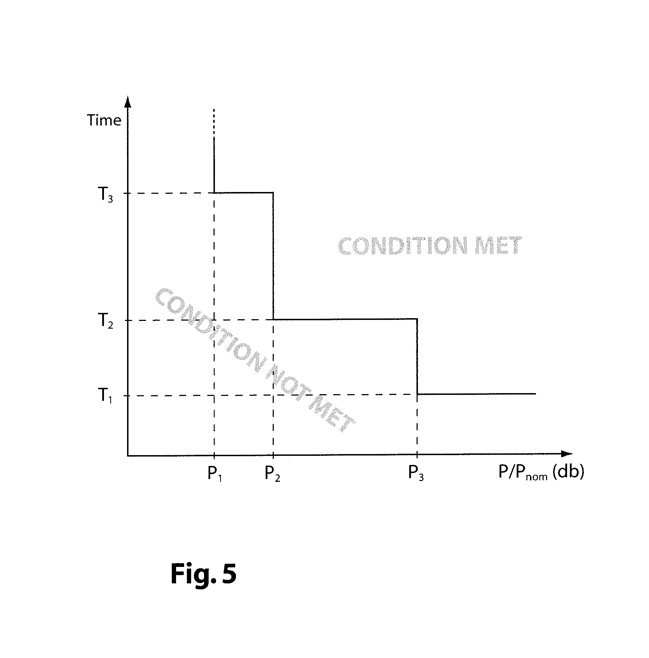

The three stage detector 10 of Fig. 3 has a switching characteristic as shown in Fig. 5. Fig. 5 shows a graph, where the crest factor P/Pₙₒₘ is plottet against the time interval T. As can be taken from the graph, the area below the curve represents the CONDITION NOT MET domain, i. e. non of the level threshold values P₁, P₂, P₃ have been exceeded for the respective time intervals T₁, T₂ and T₃.

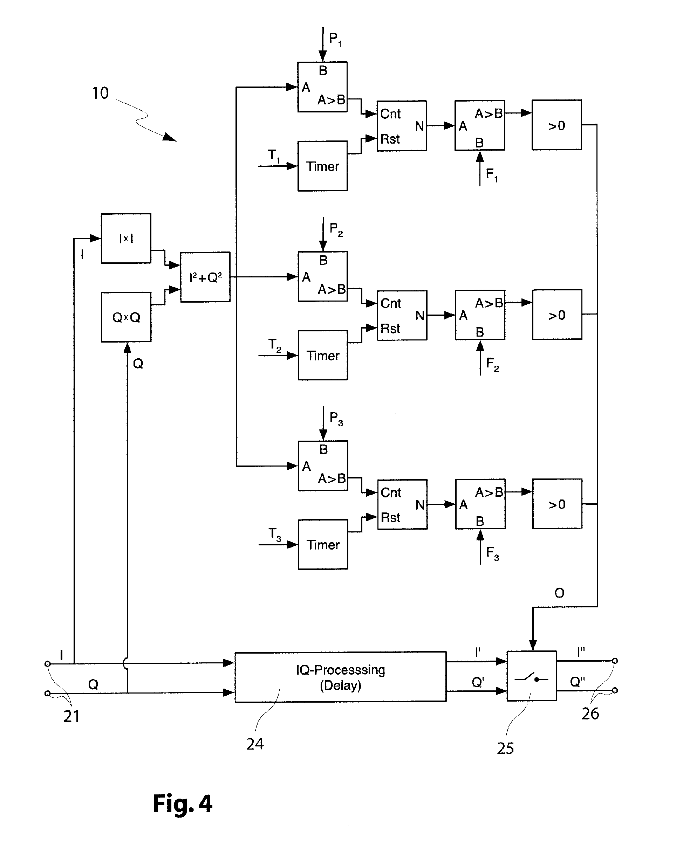

Fig. 4 shows a protective circuit according to the present invention, where a device 10 according to the embodiment of Fig. 3 is parallelly connected to a signal processing unit 24 and an interrupter 25. The information signal is fed to the protective circuit through input 21, and to the signal processing unit 24. The output of the signal processing unit 24 is then fed to the interrupter 25 and further to the input 26 of the protective device.

The I- and the Q-component of the information signal are sampled at the input 21 and used as an input to the second and third mixer units. The output of the device 10 is connected to a control port of the interrupter 25, the interrupter being operative to interrupt the signal path between the input 21 and the output 26 upon reception of a CONDITION MET signal at its control input.

The signal processing unit 24 is operative to delay the information signal along the signal path between the input 21 and the output 26 such that it is made sure that an excess level of the input signal at the input 21 is recognized and signaled to the interrupter 25 by the output signal of the device 10 before this particular excess signal level reaches the interrupter 25 on the signal path, thereby making sure that the excess signal level is not communicated to the output 26. This means, that the signal processing unit delays the input signal for about the same time interval than the processing of the signal level information by the device 10 takes.

## Claims

1. A method for detecting a condition, where the signal level of an information signal, particularly of an orthogonal frequency division multiplexed (OFDM) digital information signal, exceeds at least one upper predetermined signal level and/or underruns at least one lower predetermined signal level for at least a first predetermined time interval, the method comprising:
- feeding the information signal to at least one first mixer unit (4) for producing a first signal, said first signal representing at least a sufficiently close measure of the instantaneous level of the information signal;
- comparing said first signal to a at least a first level threshold value (P₁), said first level threshold value (P₁) representing a measure of said predetermined upper or lower level of said information signal;
- counting the number of incidences per time unit (N) where said first signal is above or below said first level threshold value (P₁), respectively, said time unit being determined by said predetermined time interval (T₁);
- comparing said number of incidences per time unit (N) to a first frequency threshold value (F₁) and determining, if the number of occurrences where said number of incidences exceeds the first frequency threshold value (F₁) has a zero value or a non-zero value; and
- setting an output signal (O) to a first value representing a CONDITION NOT MET state, if the said number of occurrences has a zero value or setting said output signal (O) to a second value representing a CONDITION MET state, if the said number of occurrences has a non-zero value.

2. A method according to claim 1, wherein
the information signal is digital and comprises an I- and a Q-component (I, Q), said I-component (I) being fed to a second mixer unit (2a; 3a) and set Q-component (Q) being fed to a third mixer unit (2b; 3b).

3. A method according to claim 2, wherein
the output signals of the said second and third mixer units (2a, 2b; 3a, 3b) are fed to said first mixer unit (4).

4. A method according to claim 3, wherein
said first mixer unit (4) is operative to produce an additive mix of the signals being fed to it.

5. A method according to any of claims 2 to 4, wherein
said second and third mixer units (2a, 2b; 3a, 3b) are operative to produce the magnitude of the signals being fed to them.

6. A method according to claim 5, wherein
said first signal represents an estimate of the instantaneous amplitude of the information signal.

7. A method according to any of claims 2 to 4, wherein
said second and third mixer units (2a, 2b; 3a, 3b) are operative to produce the square of the signals being fed to them.

8. A method according to claim 7, wherein
said first signal represents the instantaneous power χ² of the information signal.

9. A method according to any of claims 1 to 8, further including the steps of:
- comparing said first signal to second and/or a third level threshold values (P₂, P₃), said second and/or third level threshold values (P₂, P₃) representing measures of second and/or third predetermined upper or lower levels of said information signal, respectively;
- counting the numbers of incidences per time units (N) where said first signal is above or below said second and/or third level threshold values (P₂, P₃), respectively, said time units being determined by second and third predetermined time intervals (T₂, T₃), respectively;
- comparing said numbers of incidences per time units (N) to second and/or third frequency threshold values (F₂, F₃) and determining, if the numbers of occurrences where said numbers of incidences exceed the second and/or third frequency threshold values (F₂, F₃) have a zero value or a non-zero value; and
- setting said output signal (O) to said first value representing a CONDITION NOT MET state, if the said numbers of occurrences have a zero value or setting said output signal to said second value representing a CONDITION MET state, if the said numbers of occurrences have a non-zero value.

10. A method according to any of claims 1 to 9, wherein
said first, second and/or third level threshold values (P₁, P₂, P₃), said first, second and/or third time intervals (T₁, T₂, T₃) and/or said first, second and/or third frequency threshold values (F₁, F₂, F₃) are modified by a control unit, particularly in response to an external control input signal.

11. A device (10) for detecting a condition, where the signal level of an information signal, particularly of an orthogonal frequency division multiplexed (OFDM) digital information signal, exceeds at least one upper predetermined signal level and/or underruns at least one lower predetermined signal level for at least a first predetermined time interval,
**characterized by**
- at least one first mixer unit (4) to which the information signal is fed for producing an output of a first signal, said first signal representing at least a sufficiently close measure of the instantaneous level of the information signal;
- at least one first comparator (5) to which the said first signal is fed for comparing the first signal to a first level threshold value (P₁), said first level threshold value (P₁) representing a measure of said predetermined upper or lower level of said information signal;
- at least one counter (6) to which the output of said first comparator (5) is fed for counting the number of incidences per time unit (N) where the output of the said first comparator indicates that said first signal is above or below said first level threshold value (P₁), respectively;
- at least one second comparator (7) to which the output of the counter (6) indicating the number of incidences per time unit (N) is fed for being compared to a first frequency threshold value (F₁); and
- means (8) for determining, if the number of occurrences where said number of incidences exceed the first frequency threshold value (F₁) has a zero value or a non-zero value, and setting an output signal (O) to a first value representing a CONDITION NOT MET state, if the said number of occurrences has a zero value or setting said output signal (O) to a second value representing a CONDITION MET state, if the said number of occurrences has a non-zero value.

12. A device (10) according to claim 11,
**characterized by**
at least one timer (9) for resetting the counter (6) every time unit interval by a signal being fed to the counter (6) from the timer (9), said time unit being determined by said predetermined time interval (T₁) being fed to said timer (9).

13. A device (10) according to claims 11 or 12,
**characterized in that**
said first mixer unit (4) is an additive mixer.

14. A device (10) according to any of claims 11 or 13,
**characterized by**
at least one second mixer unit (2a; 3a) and at least one third mixer unit (2b; 3b), whereby the outputs of the second and third mixer units (2a, 2b; 3a, 3b) are fed to the first mixer unit (4).

15. A device (10) according to claim 14,
**characterized in that**
said second and/or third mixer units (2a, 2b; 3a, 3b) are multiplicative mixers.

16. A device (10) according to claim 14,
**characterized in that**
said second and/or third mixer units (2a, 2b; 3a, 3b) are rectifiers.

17. A device (10) according any of claims 11 to 16,
**characterized in that**
the second and/or third mixer units (2a, 2b; 3a, 3b) are so wired as to process one component, respectively, of a digital information signal having multiple components, preferably an I- and a Q-component.

18. A device (10) according any of claims 11 to 17,
further **characterized by**
- at least one second and/or third set of first comparators (5) to which the said first signal is fed for comparing the first signal to second and/or third level threshold values (P₂, P₃), said second and/or third level threshold values (P₂, P₃) representing measures of second and/or third predetermined upper or lower levels of said information signal;
- at least one second and/or third set of counters (6) to which the outputs of said second and/or third set of first comparators (5) are fed for counting the number of incidences per time units (N) where the outputs of the said second and/or third set of first comparators indicate that said first signal is above or below said second and/or third level threshold values (P₂, P₃), respectively;
- at least one second and/or third set of second comparators (7) to which the outputs of the second and/or third set of counters (6) indicating the numbers of incidences per time units (N) are fed for being compared to second and/or third frequency threshold values (F₂, F₃); and
- at least one second and/or third set of means (8) for determining, if the numbers of occurrences where said numbers of incidences exceed the second and/or third frequency threshold values (F₂, F₃) have a zero value or a non-zero value, and setting said output signal (O) to a first value representing a CONDITION NOT MET state, if the said numbers of occurrences have a zero value or setting said output signal (O) to a second value representing a CONDITION MET state, if the said numbers of occurrences have a non-zero value.

19. A device (10) according to claim 18,
**characterized by**
at least one second and/or third set of timers (9) for resetting the second and/or third set of counters (6), respectively, every time unit intervals by a signal being fed to the respective second and/or third set of counters (6) from the timers (9), said time units being determined by second and/or third predetermined time intervals (T₂, T₃) being fed to said respective second and/or third set of timers (9).

20. A device (10) according to any of claims 11 to 19,
**characterized by**
a control unit, which is operative to modify said first, second and/or third level threshold values (P₁, P₂, P₃), said first, second and/or third time intervals (T₁, T₂, T₃) and/or said first, second and/or third frequency threshold values (F₁, F₂, F₃), particularly in response to an external control input signal.

21. A protective circuit of an information signal processor or an information signal amplifier, particularly a digital information signal processor or a digital information signal amplifier, comprising a device (10) in accord with any of claims 11 to 20,
**characterized by**
an interrupter (25), which is operative to interrupt a signal path following the state of the said output signal (O).

22. A protective circuit according to claim 21,
further **characterized by**
an input (21) for feeding the information signal to the signal path and/or an output (26) for outputting the information signal to downstream appliances.

23. A protective circuit according to claims 21 or 22,
further **characterized by**
a signal processing unit (24), which is connected in parallel to the device (10) and upstream of the interrupter (25) with regard to the signal path and which is operative to delay the information signal for about an equal amount of time as processing of the information signal by the device (10) takes.

24. Use of a method in accord with any of claims 1 to 10 or a device in accord with any of claims 11 to 20 in an information signal processor or an information signal amplifier and particularly in a protective circuit of a digital information signal processor or a digital information signal amplifier.

25. Use according to claim 24, wherein the output signal (O) is used to conditionally interrupt a signal path of the information signal.
